# EUROPÄISCHE PATENTSCHRIFT

(11) **EP 4 379 334 B1**
(45) Veröffentlichungstag und Bekanntmachung des Hinweises auf die Patenterteilung: **22.01.2025**
(21) Anmeldenummer: 22210476.2
(22) Anmeldetag: 30.11.2022
(51) Int. Cl.: G01K 7/34, G01N 9/24

(54) **VERFAHREN ZUR DREIDIMENSIONALEN TEMPERATURMESSUNG UND VORRICHTUNG**
THREE-DIMENSIONAL TEMPERATURE MEASUREMENT METHOD AND DEVICE
PROCÉDÉ ET DISPOSITIF DE MESURE TRIDIMENSIONNELLE DE TEMPÉRATURE

(43) Veröffentlichungstag der Anmeldung: 05.06.2024
(73) Patentinhaber: ArianeGroup GmbH, 82024 Taufkirchen (DE)
(72) Erfinder: Behruzi, Kei-Philipp, 28199 Bremen (DE)
(74) Vertreter: Marschall, Stefan

(56) Entgegenhaltungen:
- HIROSE YUSUKE ET AL: "Noninvasive Measurement of Temperature Distribution in a Pipe by Using Electrical Capacitance Tomography", VOLUME 5: INNOVATIVE NUCLEAR POWER PLANT DESIGN AND NEW TECHNOLOGY APPLICATION; STUDENT PAPER COMPETITION, 7 July 2014 (2014-07-07), pages - 1, XP093047370, ISBN: 978-0-7918-4595-0, Retrieved from the Internet <URL:http://dx.doi.org/10.1115/ICONE22-30004> [retrieved on 20230516], DOI: 10.1115/ICONE22-30004
- HUNT ANDREW ET AL: "High-speed density measurement for LNG and other cryogenic fluids using electrical capacitance tomography", CRYOGENICS, ELSEVIER, KIDLINGTON, GB, vol. 113, 24 October 2020 (2020-10-24), XP086482227, ISSN: 0011-2275, [retrieved on 20201024], DOI: 10.1016/J.CRYOGENICS.2020.103207

## Beschreibung

Die Erfindung betrifft ein Verfahren zur Messung eines dreidimensionalen Temperaturfeldes einer Flüssigkeit und eine Vorrichtung zur Durchführung eines derartigen Verfahrens.

Herkömmlicherweise werden Temperaturfelder mittels Temperatursensoren erfasst. Temperatursensoren liefern jedoch nur punktuelle Informationen. Zur Erfassung eines lückenlosen Temperaturfeldes müssten unendlich viele Temperatursensoren vorgesehen sein. Insbesondere im Bereich von tiefkalten kryogenen Flüssigkeiten wie flüssigen Wasserstoff in einem Tank ist die herkömmliche Temperaturmessung nicht geeignet, um ein dreidimensionales Temperaturfeld der Flüssigkeit zu erhalten.

Allgemeinen technologischen Hintergrund bilden der Aufsatz von HIROSE YUSUKE ET AL: "Noninvasive Measurement of Temperature Distribution in a Pipe by Using Electrical Capacitance Tomography", VOLUME 5: INNOVATIVE NUCLEAR POWER PLANT DESIGN AND NEW TECHNOLOGY APPLICATION; STUDENT PAPER COMPETITION, 7. Juli 2014 (2014-07-07), XP093047370, DOI: 10.1115/ICONE22-30004 ISBN: 978-0-7918-4595-0, gefunden im Internet: URL:http://dx.doi.org/10.1115/ICONE22-30004> am 2023-05-16, sowie der Aufsatz von HUNT ANDREW ET AL: "High-speed density measurement for LNG and other cryogenic fluids using electrical capacitance tomography", CRYOGENICS, ELSEVIER, KIDLINGTON, GB, Bd. 113, 24; Oktober 2020 (2020-10 24), XP086482227, ISSN: 0011-2275, DOI: 10.1016/J.CRYOGENICS.2020.103207, gefunden am 2020-10-24.

Aufgabe der Erfindung ist es, ein verbessertes Verfahren zur Messung eines dreidimensionalen Temperaturfeldes einer Flüssigkeit und eine Vorrichtung zur Durchführung eines derartigen Verfahrens zu schaffen.

Diese Aufgabe wird gelöst durch ein Verfahren mit den Merkmalen des Patentanspruchs 1 und durch eine Vorrichtung mit den Merkmalen des Patentanspruchs 5.

Bei einem erfindungsgemäßen Verfahren zur Messung eines dreidimensionalen Temperaturfeldes einer Flüssigkeit in einem Behältnis, insbesondere von kryogenen Flüssigkeiten in einem Tank, wird mittels kapazitiver Elektrotomographie eine lokale Flüssigkeitsdichte bestimmt. Anhand der lokalen Flüssigkeitsdichte und eines lokalen Flüssigkeitsdruckes wird dann die lokale Temperatur abgeleitet. Durch eine vielfache Wiederholung der lokalen Temperaturableitung entsteht das dreidimensionale Temperaturfeld.

Die kapazitive Elektrotomographie (Electrical Capacitance Tomography, ECT) zeichnet sich dadurch aus, dass eine Reihe von Elektroden an den Grenzen des zu charakterisierenden Volumens platziert werden. Die von den Elektroden wechselseitig ausgesendeten elektrischen Signale werden von den Nachbarelektroden empfangen. Die kapazitive Elektrotomographie ermöglicht nun die Bestimmung der Dichte eines Mediums. Die Dichteänderungen von flüssigem Wasserstoff variieren in der Größenordnung von etwa 10% in einem gängigen Druckbereich für kryogenen Wasserstoff in einem Treibstofftank eines Triebwerks einer Weltraumrakete von 1 bar bis 4 bar. Die Temperaturspanne ist dann zwischen 20 K und 26 K. Es ist zu erwarten, dass Temperaturdifferenzen unter 1 K Genauigkeit aufgelöst werden können. Die Daten können in ihrer räumlichen Verteilung in Echtzeit erfasst werden. Das erfindungsgemäße Verfahren ermöglicht eine präzise Messung eines dreidimensionalen Temperaturfelds einer Flüssigkeit, insbesondere auch von kryogenen Flüssigkeiten wie flüssiger Wasserstoff in einem Triebwerkstank. Das erfindungsgemäße Verfahren eignet sich nicht nur unter terrestrischen Bedingungen und Bedingungen während angetriebener oder beschleunigter Phasen, sondern ebenfalls bei Mikrogravitation und fehlender Gravitation im Weltraum.

Die Flüssigkeitsdichte wird aus der Dielektrizitätskonstante bestimmt. Denn die Stärke des empfangenen elektrischen Signals hängt von der Dielektrizitätskonstante des Mediums ab, die von der Dichte des eingeschlossenen Mediums abhängt. Insbesondere wird die Flüssigkeitsdichte aus der Dielektrizitätskonstante für den gesättigten Zustand bestimmt. Denn die Flüssigkeit befindet sich dann im Siedepunkt und die Dichte bildet mit der Dielektrizitätskonstanten einen (linearen) funktionalen Zusammenhang.

Bevorzugterweise werden eine Vielzahl von einzelnen Druckmesswerten in dem Behältnis erfasst (Drucksensorenfeld) und der lokale Druck aus den einzelnen Druckmesswerten bestimmt. Die Bestimmung kann mittels eines geeigneten Schätzverfahrens erfolgen. Durch diese Maßnahme lässt sich der lokale Druck präzise angeben.

Alternativ lässt sich der lokale Druck auch durch die kapazitive Elektrotomografie selbst bestimmen. Da mittels der kapazitiven Elektrotomografie die Verteilung der Flüssigkeit in dem Behältnis bestimmt werden kann und bei Bewegung des Behältnisses wie in einer beschleunigten Phase die Beschleunigung(srichtung) bekannt ist, lässt der Druck ohne eine Vielzahl von herkömmlichen Drucksensoren ermitteln, sondern sich aus der Messung selbst abschätzen, wenn der Druck im Gasraum bekannt ist.

Bevorzugterweise wird die lokale Temperatur unter Kenntnis der Dichte für den gesättigten Zustand und des Druckes mittels einer Stoffdatenbank abgeleitet. Stoffdatenbanken ermöglichen einen schnellen Zugriff ohne aufwendige Rechenoperationen.

Eine erfindungsgemäße Vorrichtung zur Durchführung des erfindungsgemäßen Verfahrens hat eine kapazitive Elektrotomographie-Einrichtung zur Bestimmung einer lokalen Flüssigkeitsdichte, eine Druckmesseinrichtung zur Messung eines lokalen Flüssigkeitsdruckes und eine Einrichtung zur Ermittlung der lokalen Temperatur der Flüssigkeit aus der lokalen Flüssigkeitsdichte für den gesättigten Zustand der Flüssigkeit und dem lokalen Flüssigkeitsdruck.

Eine solche Vorrichtung ermöglicht eine präzise Erfassung eines dreidimensionalen Temperaturfeldes, insbesondere auch bei kryogenen Flüssigkeiten wie flüssiger Wasserstoff in einem Treibstofftank.

Die Druckmesseinrichtung kann eine Vielzahl von Druckmesssensoren aufweisen, die bevorzugterweise gleichmäßig über den Behältnisinnenumfang verteilt sind, so dass einzelne Druckmesswerte in verschiedenen Bereichen des Behältnisses erfasst werden.

Alternativ kann die Druckmesseinrichtung lediglich einen Drucksensor aufweisen, mittels dem währen ballistischen Flugphasen der Druck ermittelt werden kann, da die Hydrostatik gering bzw. vernachlässigbar ist.

Bevorzugterweise ist die Einrichtung zur Ermittlung der lokalen Temperatur der Flüssigkeit aus der lokalen Flüssigkeitsdichte und dem lokalen Flüssigkeitsdruck eine Stoffdatenbank. Stoffdatenbanken können im Vorfeld für jedes Behältnis bzw. jeden Tank und dessen Flüssigkeit erstellt werden.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert.
- Figur 1: ein erfindungsgemäßes Verfahren zur Messung eines dreidimensionalen Temperaturfeldes einer Flüssigkeit, und
- Figur 2: eine erfindungsgemäße Vorrichtung zur Durchführung des in Figur 1 gezeigten Verfahrens.

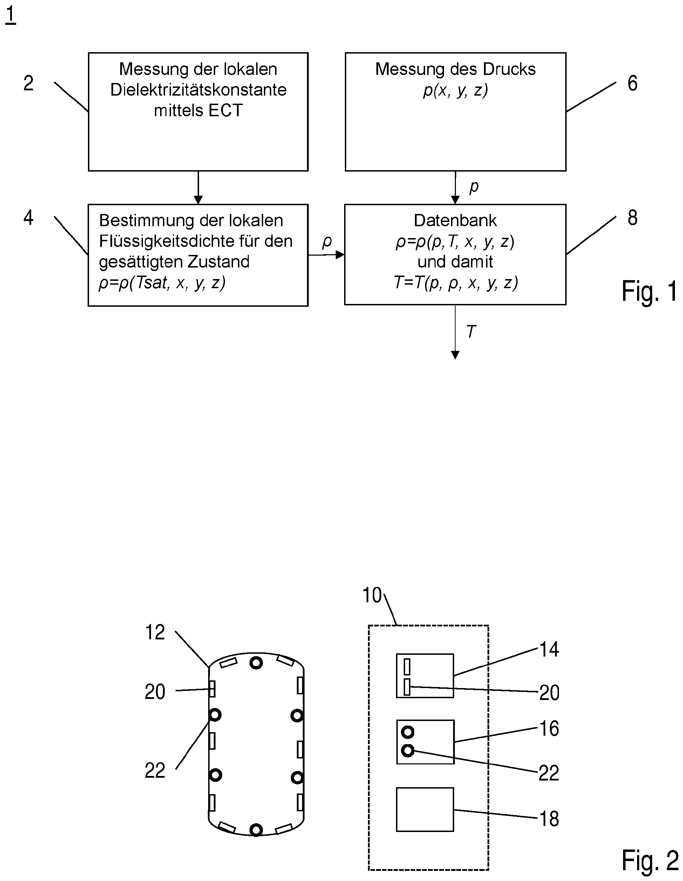

Figur 1 zeigt schematisch ein erfindungsgemäßes Verfahren bzw. Messprinzip 1 zur Bestimmung einer lokalen Flüssigkeitstemperatur T zur Messung eines dreidimensionalen Temperaturfelds einer Flüssigkeit in einem Behältnis. Eine bespielhafte Flüssigkeit ist kryogener Raketentreibstoff wie flüssiger Wasserstoff in einem Treibstofftank eines Triebwerkes einer Raumfahrtrakete.

In einem ersten Schritt 2 wird mittels kapazitiver Elektrotomografie 2 eine lokale Dielektrizitätskonstante gemessen.

Anschließend wird in einem Folgeschritt 4 für den gesättigten Zustand (Sättigungstemperatur *Tsat*), d.h. unter der Annahme, dass sich die Flüssigkeitstemperatur T im Siedepunkt befindet, unter Berücksichtigung der lokalen Dielektrizitätskonstante eine lokale Dichte *ρ* der Flüssigkeit bestimmt. Im Sättigungszustand bilden die Dielektrizitätskonstante und die Dichte *ρ* einen (linearen) funktionellen Zusammenhang.

Zudem wird in einem Schritt 6 ein Druck p der Flüssigkeit ermittelt.

In einem nächsten Schritt 8 wird die lokale Temperatur T aus der zuvor bestimmten Dichte *ρ* und dem Druck p mittels einer Stoffdatenbank ermittelt.

Die lokale Hydrostatik kann häufig vernachlässigt werden, was zumindest bei flüssigem Wasserstoff aufgrund der geringen Dichte *ρ* (~70kg/m³) meist auch vertretbar ist. Der zu erwartende Fehler in der Temperaturmessung ist dann gering bzw. vernachlässigbar.

Zudem sei erwähnt, dass Flüssigkeiten entweder unterkühlt oder gesättigt auftreten können. Überhitzte Flüssigkeiten, die z.B. bei flüssigem Wasserstoff in der Größenordnung von etwa 0.1 K auftreten, können, bevor sie in den Siedezustand übergehen, vernachlässigt werden.

In Figur 2 ist schematisch eine erfindungsgemäße Vorrichtung 10 illustriert. Die Vorrichtung 10 ist einem Flüssigkeitsbehältnis 12 zugeordnet und hat eine kapazitive Elektrotomographie-Einrichtung 14 zur Bestimmung einer Flüssigkeitsdichte *ρ*, eine Druckmesseinrichtung 16 zur Messung eines lokalen Flüssigkeitsdruckes p in dem Behältnis 12 und einer Einrichtung 18 zur Ermittlung der lokalen Temperatur T der Flüssigkeit aus der lokalen Flüssigkeitsdichte *ρ* und dem lokalen Flüssigkeitsdruckes p.

Die kapazitiven Elektrotomographie-Einrichtung 14 hat eine Vielzahl von (gleichmäßig) innenseitig am Behältnis angeordneten ECT-Sensoren, beispielsweise in Form von plattenförmigen Elektroden 20.

Die Druckmesseinrichtung 16 weist bevorzugterweise eine Vielzahl von Drucksensoren 22 (Drucksensorfeld) auf, die (gleichmäßig) innenseitig am Behältnis 12 verteilt sind.

Die Einrichtung 18 zur Ermittlung der lokalen Temperatur T der Flüssigkeit ist in dem gezeigten Ausführungsbeispiel eine Stoffdatenbank, aus der eine Temperatur T bei gegebener Dichte *ρ* und gegebenem Druck p für eine bestimmte Flüssigkeit abgelesen werden kann.

Eine Steuerungs- und Kontrolleinrichtung der Vorrichtung 12 ist nicht gezeigt.

Bei einer nicht gezeigten ersten Alternative zum Drucksensorfeld ist zur Druckmessung nur ein Drucksensor 22 vorgesehen, mittels dem dann während ballistischen Flugphasen der Druck p ermittelt wird. Während solchen Flugphasen ist die Hydrostatik gering bzw. vernachlässigbar.

Eine nicht gezeigte zweite Alternative zum Drucksensorfeld benötigt lediglich einen Drucksensor, nämlich dann, wenn der lokale Druck aus der kapazitiven Elektrotomografie selbst abgeschätzt wird.

Offenbart sind ein Verfahren zur Messung eines dreidimensionalen Temperaturfeldes einer Flüssigkeit in einem Behältnis, insbesondere von kryogenen Flüssigkeiten, wobei mittels kapazitiver Elektrotomographie eine lokale Flüssigkeitsdichte bestimmt wird und anhand der lokalen Flüssigkeitsdichte und eines lokalen Flüssigkeitsdruckes die lokale Temperatur abgeleitet wird, sowie eine Vorrichtung zur Durchführung eines derartigen Verfahrens.

### Bezugszeichenliste

- 1: Messprinzip
- 2: kapazitive Elektrotomografie
- 4: Dichtebestimmung
- 6: Druckbestimmung
- 8: Temperaturbestimmung

- 10: Vorrichtung
- 12: Flüssigkeitsbehältnis / Behältnis
- 14: kapazitiven Elektrotomographie-Einrichtung
- 16: Druckmesseinrichtung
- 18: Einrichtung zur Ermittlung der lokalen Flüssigkeitstemperatur
- 20: ECT-Sensoren
- 22: Drucksensor

- p: Druck
- *ρ*: Dichte
- T: Temperatur
- x, y, z: Ortskoordinaten
- Tsat: Sättigungstemperatur

## Patentansprüche

1. Verfahren zur Messung eines dreidimensionalen Temperaturfeldes einer Flüssigkeit in einem Behältnis (12), insbesondere von kryogenen Flüssigkeiten, **dadurch gekennzeichnet, dass** mittels kapazitiver Elektrotomographie eine lokale Flüssigkeitsdichte (*ρ*) aus der Dielektrizitätskonstante für den gesättigten Zustand bestimmt wird und anhand der lokalen Flüssigkeitsdichte (*ρ*) und eines lokalen Flüssigkeitsdruckes (p) die lokale Temperatur (T) abgeleitet wird.

2. Verfahren nach Patentanspruch 1, wobei eine Vielzahl von einzelnen Druckmesswerten in dem Behältnis (12) erfasst werden und der lokale Druck (p) aus den einzelnen Druckmesswerten bestimmt wird.

3. Verfahren nach Patentanspruch 1, wobei die Druckmessung durch ausschließlich einen Drucksensor erfolgt und der lokale Druck mittels kapazitiver Elektrotomographie bestimmt wird.

4. Verfahren nach einem der vorhergehenden Patentansprüche, wobei die lokale Temperatur (T) aus einer Stoffdatenbank (18) der Flüssigkeit ermitteln wird.

5. Vorrichtung (10) zur Durchführung des Verfahrens nach einem der vorhergehenden Patentansprüche, **gekennzeichnet durch** eine kapazitive Elektrotomographie-Einrichtung (14), eine Druckmesseinrichtung (16) zur Messung eines lokalen Flüssigkeitsdruckes (p) und eine Einrichtung (18) zur Ermittlung der lokalen Temperatur (T) der Flüssigkeit aus der lokalen Flüssigkeitsdichte (*ρ*) für den gesättigten Zustand der Flüssigkeit und dem lokalen Flüssigkeitsdruck (p).

6. Vorrichtung nach Patentanspruch 5, wobei die Druckmesseinrichtung (16) eine Vielzahl von Drucksensoren (22) aufweist.

7. Vorrichtung nach Patentanspruch 5, wobei die Druckmesseinrichtung (16) genau einen Drucksensor (22) aufweist.

8. Vorrichtung nach Patentanspruch 5, 6 oder 7, wobei die Einrichtung (1) zur Ermittlung der lokalen Temperatur der Flüssigkeit aus der lokalen Flüssigkeitsdichte (*ρ*) und dem lokalen Flüssigkeitsdruck (p) eine Stoffdatenbank ist.

## Claims

1. A method for the measurement of a three-dimensional temperature field of a liquid in a container (12), in particular of cryogenic liquids, **characterised in that** by means of electrical capacitance tomography a local liquid density (*ρ*) is determined from the dielectric constant for the saturated state and the local temperature (T) is derived on the basis of the local liquid density (*ρ*) and a local liquid pressure (p).

2. The method according to claim 1, wherein a multiplicity of individual pressure measurement values in the container (12) is recorded and the local pressure (p) is determined from the individual pressure measurement values.

3. The method according to claim 1, wherein the pressure measurement takes place exclusively by means of a pressure sensor and the local pressure is determined by means of electrical capacitance tomography.

4. The method according to any one of the preceding claims, wherein the local temperature (T) is ascertained from a substance databank (18) of the liquid.

5. An apparatus (10) for performing the method according to any one of the preceding claims, **characterised by** an electrical capacitance tomography device (14), a pressure measuring device (16) for measuring a local liquid pressure (p) and a device (18) for determining the local temperature (T) of the liquid from the local liquid density (*ρ*) for the saturated state of the liquid and the local liquid pressure (p).

6. The apparatus according to claim 5, wherein the pressure measuring device (16) comprises a plurality of pressure sensors (22).

7. The apparatus according to claim 5, wherein the pressure measuring device (16) comprises precisely one pressure sensor (22).

8. The apparatus according to claim 5, 6 or 7, wherein the device (1) for determining the local temperature of the liquid from the local liquid density (*ρ*) and the local liquid pressure (p) is a substance databank.

## Revendications

1. Procédé, destiné à mesurer un champ de températures tridimensionnel d'un liquide dans un contenant (12), notamment de liquides cryogéniques, **caractérisé en ce qu'**au moyen d'une tomographie électrique capacitive, une densité locale (*p*) du liquide est déterminée à partir de la constante de diélectrique pour l'état saturé et la température locale (T) est dérivée à l'aide de la densité locale (*p*) du liquide et d'une pression locale (p) du liquide.

2. Procédé selon la revendication 1 du brevet, une pluralité de valeurs de mesure de la pression dans le contenant (12) étant détectée et la pression locale (p) étant déterminée à partir des valeurs de mesure individuelles.

3. Procédé selon la revendication 1 du brevet, la mesure de la pression s'effectuant exclusivement par un capteur de pression et la pression locale étant déterminée au moyen d'une tomographie électrique capacitive.

4. Procédé selon l'une quelconque des revendications précédentes du brevet, la température locale (T) étant déterminée à partir d'une base de données des substances (18) du liquide.

5. Dispositif (10), destiné à réaliser le procédé selon l'une quelconque des revendications précédentes du brevet, **caractérisé par** un système (14) de tomographie électrique capacitive, par un système (16) de mesure de la pression, destiné à mesurer une pression locale (p) du liquide et par un système (18), destiné à déterminer la température locale (T) du liquide à partir de la densité locale du liquide (*p*) pour l'état saturé du liquide et de la pression locale (p) du liquide.

6. Dispositif selon la revendication 5 du brevet, le système (16) de mesure de la pression comportant une pluralité de capteurs de pression (22).

7. Dispositif selon la revendication 5, le système (16) de mesure de la pression comportant exactement un capteur de pression (22).

8. Dispositif selon la revendication 5, 6 ou 7, le système (1) destiné à déterminer la température locale du liquide à partir de la densité locale du liquide (*p*) et de la pression locale (p) du liquide étant une base de données des substances.
